**Europäisches Patentamt**

**European Patent Office**

**Office européen des brevets**

(19)

(11) Veröffentlichungsnummer: **0 282 800 B1**

(12) **EUROPÄISCHE PATENTSCHRIFT**

(45) Veröffentlichungstag der Patentschrift: **04.09.91**

(51) Int. Cl.⁵: **B65G 57/18, B23Q 7/10**

(21) Anmeldenummer: **88103007.6**

(22) Anmeldetag: **29.02.88**

(54) **Schallisolierte Führungseinrichtung für Werkstückmagazin.**

(30) Priorität: **27.02.87 DE 3706375**

(43) Veröffentlichungstag der Anmeldung:
**21.09.88 Patentblatt 88/38**

(45) Bekanntmachung des Hinweises auf die
Patenterteilung:
**04.09.91 Patentblatt 91/36**

(84) Benannte Vertragsstaaten:
**DE FR GB IT NL**

(56) Entgegenhaltungen:
**DE-A- 3 420 014        DE-B- 1 232 071**
**DE-B- 2 941 493        DE-U- 1 985 584**
**DE-U- 7 640 764        US-A- 4 545 724**

(73) Patentinhaber: **WEERTH-HANDLING-SYSTEME**
**Mehlisstrasse 9**
**W-7985 Baindt-Schachen(DE)**

(72) Erfinder: **Mauch, Günther**
**Unteres Gässle 7**
**W-7983 Wilhelmsdorf(DE)**
Erfinder: **Krug, Wolfgang**
**Reinhold-Abele-Strasse 22**
**W-7981 Waldburg(DE)**

(74) Vertreter: **Zipse + Habersack**
**Kemnatenstrasse 49**
**W-8000 München 19(DE)**

**Beschreibung**

Die Erfindung betrifft eine Vorrichtung zur geordneten und gräuscharmen Eingabe von rohr- oder stangenförmigen Werkstücken von einer Werkstückzuführeinrichtung in ein mobiles Magazin in Form einer nach oben offenen, absenkbaren Gurtschleife, wie es aus der DE-A-34 20 014 bekannt ist. Eine solche Vorrichtung soll eine möglicherweise beim Einfüllen der Werkstücke entstehende Unordnung wie Querliegen oder seitliches Hinausspringen verhindern. Durch eine schallisolierte Ausführung soll der Lärm, der beim Herunterfallen der einzelnen Werkstücke auf die bereits unten liegenden entsteht, gedämmt werden.

Es ist bekannt, daß Maschinen aus Gründen der Schallisolierung vollständig gekapselt werden. Weiter ist bekannt, daß auch punktuelle Schallisolierungen vorgenommen werden, d.h. die Schallschutzmaßnahmen werden an der Stelle getroffen, wo der Lärm entsteht. Des weiteren ist bekannt, daß beim Befüllen des mit der DE-A-34 20 014 angemeldeten Werkstückmagazins die Werkstücke von der Zuführeinrichtung mehr oder weniger weit hinunterfallen.

Dabei passiert es, daß die Werkstücke beim Aufprall auf bereits eingefüllte Werkstücke sich querstellen oder in eine Schräglage geraten. Dies führt zur Unordnung der gespeicherten Werkstücke und zu Störungen beim späteren Ausgeben.

Ebenso kommt es vor, daß ein auftreffendes Werkstück in der Weise zurückprallt und in eine Schräglage gerät, daß es zwischen die Traggurte hindurchrutscht und auf den Boden fällt.

Zwischen den Werkstücken, die in den Traggurten liegen, bilden sich, bedingt durch die Reibung, beim Befüllvorgang Hohlräume. Diese Hohlräume werden beim weiteren Befüllen, besonders beim Nachlassen der Traggurte, teilweise wieder ausgefüllt. Durch dieses sich-Setzen der Werkstücke sinkt der Werkstückpegel ab. Der Abstand zwischen der Werkstückzuführ- einrichtung und dem Auftreffpunkt vergrößert sich mehr oder weniger. Bei größerem Abstand ergeben sich auch größere Rückstellkräfte beim Aufprall der Werkstücke, womit die Neigung zum Querstellen verstärkt wird. Des weiteren steigt bei einer größeren Fallhöhe der Lärmpegel an, der beim Auftreffen der Werkstücke ensteht.

Lärmschutzmaßnahmen können bei der bekannten Ausführung des Werkstückmagazins an der Stelle, wo der Lärm entsteht, nicht durchgeführt werden. Eine dazu erforderliche allseitige Kapselung des Werkstück-Auftreffpunktes würde den Zuführweg des Werkstückes versperren, aber auch die Ausdehnung der bei höherem Befullgrad des Werkstückmagazins größer werdenden Werkstücktraube behindern. Die mehr oder weniger große Veränderung des Fallhöhen-Abstandes erschwert noch die Kapselung der Lärmquelle.

Aus diesen Gründen wäre eine vollständige Kapselung des Werkstückmagazins erforderlich, die aber sehr aufwendig ist und den Zugang für Bedienungsarbeiten behindert.

Der Erfindung liegt die Aufgabe zugrunde, ein störungsfreies Einfüllen der Werkstücke in das Werkstückmagazin zu erreichen sowie den dabei entstehenden Lärm durch eine wirkungsvolle und mit wenig Aufwand herstellbare Schallisolierung zu dämmen.

Diese Aufgabe wird bei einer gattungsgemäßen Einrichtung durch die kennzeichnenden Merkmale des Anspruchs 1 gelöst.

Nach der Erfindung ist die Absenkbewegung der Traggurte in Abhängigkeit des Volumens des Schachtes so bemessen, daß unter Berücksichtigung des stärksten Absinkens des Werkstückpegels während des Füllvorgangs, bedingt durch Ausfüllen von Hohlräumen zwischen den in den Traggurten liegenden Werkstücken, der Werkstückpegel immer innerhalb des schallgedämmten Schachtbereichs bleibt.

Um einen kontinuierlichen Übergang der Werkstücke von der Schachtaustrittsöffnung in die Traggurte zu erreichen, wodurch die Hohlraumbildung zwischen den in den Traggurten liegenden Werkstücken verringert wird, weisen nach einer weiteren Ausbildung der Erfindung die zwei in Werkstücklängsrichtung verlaufenden Wände an ihrem unteren Ende sich allmählich öffnende Verlängerungen auf.

Des weiteren ist ein Näherungsschalter (beispielsweise eine Lichtschranke) vorgesehen, welcher ein Signal gibt, wenn die Werkstücke auf Schalterhöhe abgesunken sind.

In den in Werkstücklängsrichtung verlaufenden Wänden sind im unteren Bereich Aussparungen vorgesehen, in die die Traggurte hineinragen können, damit die ersten in die Traggurte hineinfallenden Werkstücke von den senkrecht zur Werkstücklängsachse verlaufenden Wänden gegen seitliches Hinausrutschen gehalten werden.

Des weiteren ist mindestens eine dieser Wände verstellbar, damit die Schachtinnenlänge verschiedenen Werkstücklängen angepasst werden kann.

Nach einer weiteren Ausbildung der Erfindung ist eine die obere Schachtöffnung abdeckende, schallisolierte Haube vorgesehen. Sie ist wegklappbar ausgebildet, um einen freien Zugriff zum Schacht-Innenraum von oben her zu gewährleisten. Die Vorteile, die mit der Erfindung erzielt werden, liegen insbesondere darin, daß beim Eingeben der Werkstücke in das Werkstückmagazin die Werkstücke immer allseitig geführt werden. Damit sind Störfälle, die auf ein Querliegen der Werkstücke in den Traggurten oder ein Hinunterfallen auf den Boden verursacht werden, weitgehend behoben. Dadurch, daß die neu zugeführten Werkstücke immer innerhalb des Schachtes auf die schon eingebrachten auftreffen, kann der dabei entstehende Lärm dort, wo er verursacht wird, auf einfache Art wirkungsvoll isoliert werden. Dies geschieht durch eine entsprechende schallisolierende Ausführung der Schachtwände und der über der Schachtöffnung liegenden Haube.

Ein Ausführungsbeispiel der Erfindung wird nachfolgend anhand von Zeichnungen näher beschrieben.

Es zeigen:

Fig.1    im Längsschnitt ein Werkstückmagazin entsprechend der DE-A-3420014 mit Zuführeinrichtung und einem schallisolierten Führungsschacht:

Fig.2    einer Ausschnitt "I" aus Fig.1 in vergrößerter Darstellung; mit hochgezogenen Traggurten und drei darin liegenden Werkstücken:

Fig.3    ein Schnittbild längs der Linie II-II in Fig.2:

Fig.4    ein Schnittbild längs der Linie III-III in Fig.2.

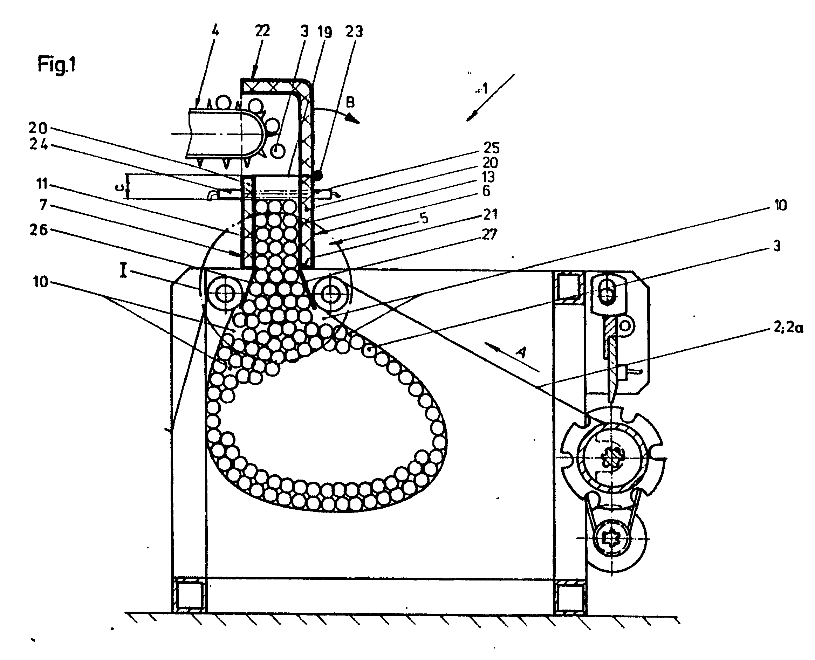

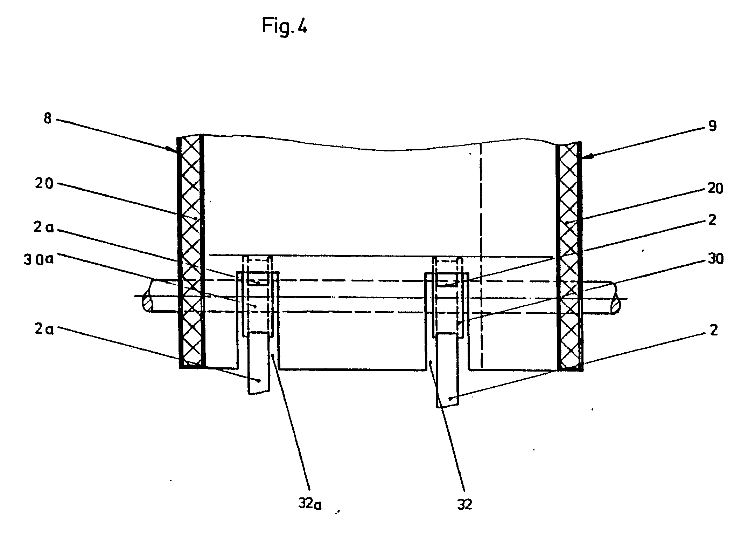

Fig.1 zeigt ein teilweise befülltes Werkstückmagazin (1) mit in den Traggurten (2,2a) liegenden Werkstücken (3). Beim Befüllen mit Hilfe der Zuführeinrichtung (4) fallen die Werkstücke (3) zunächst in den Führungsschacht (5), der fest mit dem Werkstückmagazin (1) verbunden ist und dessen in Werkstücklängsrichtung verlaufenden Wände (6,7) und quer zur Werkstücklängsrichtung verlaufenden Wände (8,9; s.Fig.3) die Werkstücke (3) allseitig umschließen. wobei die Schachtabmessungen so gewählt sind, daß von der Schachtinnenbreite "a" (Fig.3) her mindestens I Werkstück (3) oder auch mehrere Werkstücke (3) nebeneinander liegen können und die Schachtlänge "b" (Fig.3) etwas länger als die Werkstücklänge "1" ist. Durch das allseitige Umschließen der Werkstücke (3) können diese beim Einfüllen bzw. Aufprallen auf bereits eingefüllte Werkstücke (3) nicht ausweichen und sich wesentlich schrägstellen, da die Werkstücklänge "1" größer als die Schachtbreite "a" ist (Fig.3).

Beim Befüllen des Werkstückmagazins (1) kommt es vor, daß zwischen den in den Traggurten (2,2a) liegenden Werkstücke (3) Hohlräume (10) entstehen. Beim weiteren Befüllen werden die Traggurte (2,2a) in Richtung "A" abgesenkt, wobei die Hohlräume (10) durch Nachrutschen der Werkstücke (3) teilweise ausgefüllt werden. Damit vergrößert sich der Abstand "C" zwischen den im Schacht (5) liegenden Werkstücken (3) und der Schachtoberkante (19). Das Absenken der Traggurte ist in Abhängigkeit des Schachtvolumens so ausgelegt, daß der Werkstückpegelstand nur bis zur Schachtebene (21) absinkt. Damit wird erreicht, daß die von der Fördereinrichtung (4) herunterfallenden Werkstücke (3) immer innerhalb des Schachtes (5) auf die bereits eingefüllten Werkstücke (3) auftreffen. So ist die Führungsfunktion des Schachtes (5) immer gewährleistet. Außerdem ist so die Möglichkeit gegeben, durch eine entsprechende Ausführung der Schachtwände (6,7,8,9) eine wirkungsvolle Schalldämmung zu erreichen. Die Schachtwände (6,7,8,9) sind zu diesem Zweck beispielsweise mit Schall-Dämmaterial (20) versehen, wie aus Fig.1 und Fig.3 ersichtlich ist, wobei dies von dünnen Außenwänden (11,12,13,14,15,16,17,18), beispielsweise aus Stahlblech, umschlossen ist.

Die Schalldämmung der Schachtwände (6,7,8,9) kann auch auf andere Art, beispielsweise durch einseitiges Aufschäumen des Dämmaterials auf die Wände (6,7,8,9) vorgenommen werden oder die Wände selbst werden aus schalldämmendem Material hergestellt. Der nach oben entweichende Schall wird durch die Haube (22,Fig.1) gedämmt, deren Wände ebenfalls mit Dämmaterial ausgestattet sind. Der Schacht (5) endet mit seiner oberen Fläche (19,Fig.1), auf der die Haube (22) aufliegt. Die Haube (22) ist mit dem Scharnier (23) am Schacht (5) angelenkt und kann in Pfeilrichtung "B" weggeklappt werden. Somit ist ein freier Zugang zum Schacht (5) von oben her möglich . Dies ist bei evtl. auftretenden Störungen erforderlich.

Der Werkstückpegelstand im Schacht (5) wird mit einem Näherungsschalter, beispielsweise mit einer Lichtschranke (24.25), kontrolliert. Sobald der Schalter (24,25) durch die beim Befüllvorgang im Schacht (5) höhersteigenden Werkstücke (3) erreicht wird, gibt er ein Signal an eine Steuerung. die ein Absenken der Traggurte (2.2a) bewirkt, womit der Werkstückpegelstand im Schacht (5) absinkt, so daß weitere Werkstücke (3) nachgefüllt werden können.

Um an der Austrittsstelle der Werkstücke (3) aus dem Schacht (5) für diese einen allmählichen Übergang zu schaffen, womit die Bildung von Hohlräumen (10,Fig.1) sich vermindert, weisen die in Werkstücklängsrichtung verlaufenden Wände (6,7,11,13) an ihrem unteren Ende Verlängerungen (26,27,Fig.1u.2) auf, die so verlaufen, daß sich nach unten, bis zum Schachtende hin, eine allmähliche Schachtverbreiterung ergibt.

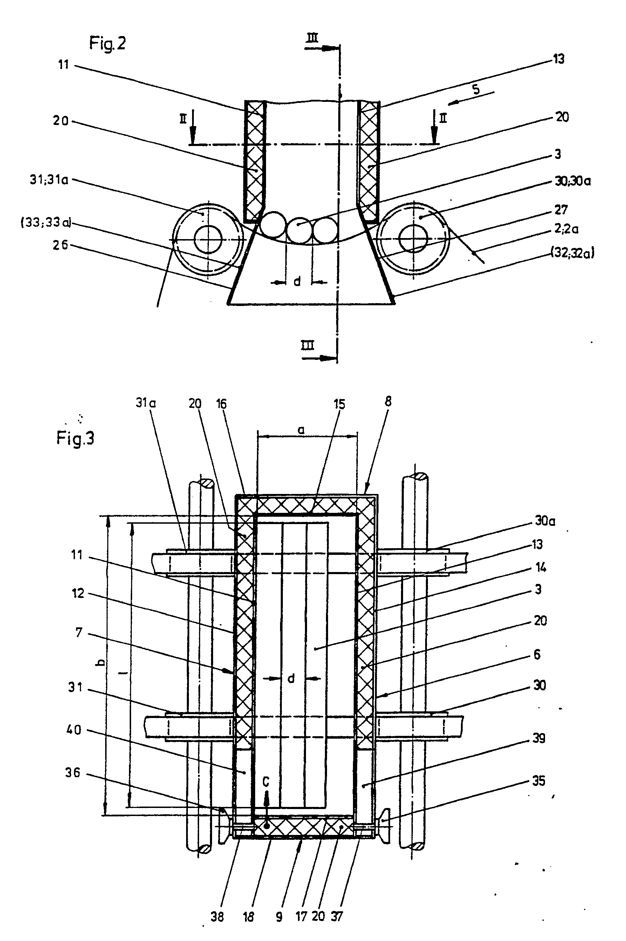

Wenn im Werkstückmagazin (1) noch keine Werkstücke (3) eingefüllt sind, werden die Traggurte (2,2a), die über die Rollen (30,30a,31,31a) geführt sind, so hoch gezogen, daß sie in den dafür vorgesehenen Aussparungen (32,32a,33,33a) der Wand- Verlängerungen (26,27) liegen, wie in Fig.2 und Fig.4 gezeigt ist.Damit wird erreicht, daß die ersten Werkstücke (3), die von der Zuführeinrichtung (4) in das Werkstückmagazin (1) gefördert werden, innerhalb des Schachtes (5) auf die Traggurte (2,2a) treffen und von allen 4 Schachtwänden (6,7,8,9) umschlossen und gegen Hinausrutschen gesichert werden.

Die senkrecht zur Werkstücklängsrichtung verlaufende Wand (9,Fig.3) ist in Pfeilrichtung "C" verstellbar und kann somit auf verschiedene Werkstücklängen "1" eingestellt werden. Die Fixierung der Wand (9) kann beispielsweise durch Verklemmen mittels Schraubgriffen (35,36) erfolgen, wobei diese auf Gewindebolzen geschraubt sind (37,38), die in den Schlitzen (39,40) der Wände (6,7) gleiten können. Auf die gleiche Weise kann auch die der Wand (9) gegenüberliegende Wand (8) verstellbar ausgeführt sein.

## Patentansprüche

1. Vorrichtung zur geordneten und geräuscharmen Eingabe von rohr- oder stangenförmigen Werkstücken von einer Werkstückzuführeinrichtung in ein mobiles Magazin in Form einer nach oben offenen, absenkbaren Gurtschleife, dadurch **gekennzeichnet**, daß zwischen der Werkstück-Zuführeinrichtung (4) und den Traggurten (2,2a) des Magazins (1) ein schallgedämmter Führungsschacht (5) angeordnet ist, dessen Innenbreite (a) größer als der Werkstückdurchmesser (d) oder ein Vielfaches des Werkstückdurchmessers ist und dessen Innenlänge (b) nur wenig länger als die Werkstücklänge (1) ist, wobei die Werkstücklänge (1) größer als die Schachtinnenbreite (a) ist, und daß

   die Absenkbewegung der Traggurte in Abhängigkeit des Volumens des Schachtes und unter Berücksichtigung eines zusätzlichen Absinkens des Werkstückpegels aufgrund sich Setzens der Werkstücke so ausgelegt ist, daß der Werkstückpegel im Schacht während des Befüllvorgangs nicht unter das untere Ende des schallgedämmten Schachtbereichs absinkt.

2. Vorrichtung nach Anspruch 1, dadurch **gekennzeichnet**, daß die parallel zur Werkstückslängsrichtung verlaufenden Schachtwände (6,7,11,13) an ihrem unteren Ende Verlängerungen (26,27) aufweisen, die so ausgebildet sind, daß bis zu deren unterem Ende, das gleichzeitig Schachtende ist, die Schachtinnenbreite (a) sich allmählich vergrößert:

3. Vorrichtung nach Anspruch 1 oder 2, dadurch **gekennzeichnet,** daß ein Näherungsschalter, beispielsweise eine Lichtschranke (24,25), in der Weise angeordnet ist, daß er von den im Schacht liegenden Werkstücken (3) geschaltet werden kann, und er ein Signal an eine Steuerung zum Absenken der Traggurte (2,2a) gibt, sobald er von den Werkstücken (3) erreicht wird.

4. Vorrichtung nach einem der Ansprüche 1 bis 3, dadurch **gekennzeichnet**, daß die unteren Bereiche der Wände (6,7,11,13,26,27) mit nach unten hin offenen Aussparungen (32,32a,33,33a) versehen sind, in die die Traggurte (2,2a) hineinragen können.

5. Vorrichtung nach einem der Ansprüche 1 bis 4, dadurch **gekennzeichnet**, daß mindestens eine der senkrecht zur Werkstücklängsachse verlaufenden Schachtwände (8,9) in Werkstücklängsrichtung einstellbar ausgeführt ist.

6. Vorrichtung nach einem der Ansprüche 1 bis 5, dadurch **gekennzeichnet**, daß die Schachteinfüllöffnung (19) mit einer Haube (22) verschlossen ist, deren Wände schallgedämmt sind und die zum Schacht (5) und zur Zuführeinrichtung (4) hin freien Durchgang hat.

7. Vorrichtung nach Anspruch 6, dadurch **gekennzeichnet,** daß die Haube (22) mit einem Gelenk (23) in der Weise befestigt ist, daß sie weggeschwenkt werden kann und im weggeschwenkten Zustand ein freier Zugang zum Schacht-Innenraum von oben her gegeben ist.

## Claims

1. Device for systematic and quiet feeding of tubular or rod-shaped workpieces from a workpiece feeder into an adjustable magazine in the form of an upwardly-open belt loop which can be lowered, characterised in that between the workpiece feeder (4) and the supporting straps (2,2a) of the magazine (1) is disposed a soundproofed guide shaft (5) whose inside width (a) is greater than the workpiece diameter (d) or a multiple of the workpiece diameter and whose inside length (b) is only slightly longer than the workpiece length (1), wherein the workpiece length (1) is greater than the shaft inside width (a), and that depending on the volume of the shaft and considering an additional sinking of the workpiece level due to the settling of the workpieces the lowering movement of the supporting straps is so designed, that the workpiece level in the shaft during the loading process does not fall below the lower end of the soundproofed shaft region.

2. Device according to claim 1, characterised in that the shaft walls (6,7,11,13) extending parallel to the longitudinal direction of the workpieces comprise, at their lower end, extensions (26,27) constructed in such a way that down to their lower end which is also the shaft end, the inside width (a) of the shaft gradually increases.

3. Device according to claim 1 or 2, characterised in that a proximity switch, for example a photoelectric cell (24,25), is arranged in such a way that it can be switched by the workpieces (3) located in the shaft, and it transmits a signal to a control means for lowering the supporting straps (2,2a) as soon as it is reached by the workpieces (3).

4. Device according to any of claims 1 to 3, characterised in that the lower regions of the walls (6,7,11,13,26,27) are provided with recesses (32,32a,33,33a) which are open at the bottom and into which the supporting straps (2,2a) can extend.

5. Device according to any of claims 1 to 4, characterised in that at least one of the shaft walls (8,9) extending perpendicularly to the longitudinal axis of the workpieces is adjustable in the longitudinal direction of the workpieces.

6. Device according to any of claims 1 to 5, characterised in that the shaft inlet opening (19) is closed by a hood (22) whose walls are soundproofed and which has free passage to the shaft (5) and to the feeder (4).

7. Device according to claim 6, characterised in that the hood (22) is attached by a hinge (23) in such a way that it can be pivoted back, and in the pivoted-back state there is free access to the shaft interior from above.

**Revendications**

1. Dispositif pour introduire en bon ordre et avec peu de bruit des pièces usinées en forme de tubes ou de tiges provenant d'un dispositif d'amenée des pièces usinées dans un magasin mobile qui présente le forme de courroies en boucle ouverte pouvant être abaissée, caractérisé par le fait qu'entre le dispositif d'amenée des pièces usinées (4) et les courroies porteuses (2, 2a) du magasin (1) est disposé un puits de guidage insonorisé (5) dont la largeur intérieure (a) est supérieure au diamètre (d) des pièces usinées ou est un multiple du diamètre des pièces usinées, et dont la longueur intérieure (b) n'est supérieure que de peu à la longueur (1) des pièces usinées, la longueur (1) des pièces usinées étant supérieure à la largeur intérieure (a) du puits, et par le fait que dépendant du volume du puits et considérant la tombée additionnelle du niveau des pièces usinées à cause d'une déposition des pièces usinées le déplacement vers le bas des courroies porteuses est calculé de telle façon que le niveau des pièces usinées dans le puits au cours du processus de remplissage, ne tombe pas au-dessous de l'extrémité inférieure de la région insonorisée du puits.

2. Dispositif selon la revendication 1, caractérisé par le fait que les parois (6, 7, 11, 13) du puits qui s'étendent parallélement à la direction longitudinale des pièces usinées présentent à leur extrémité inférieure des prolongements (26, 27) qui sont conformés de telle façon que la largeur intérieure (a) du puits s'agrandisse progressivement jusqu'à leur extrémité inférieure qui est en même temps l'extrémité du puits.

3. Dispositif selon la revendication 1 ou 2, caractérisé par le fait qu'un commutateur de proximité, par exemple une cellule photo-électrique (24, 25), est monté de telle façon qu'il puisse être commuté par les pièces usinées (3) qui se trouvent dans le puits et qu'il fournisse un signal à une commande de descente des courroies porteuses (2, 2a) dès qu'il est atteint par les pièces usinées (3).

4. Dispositif selon l'une des revendications 1 à 3, caractérisé par le fait que les régions inférieures des parois (6, 7, 11, 13, 26, 27) sont pourvues d'évidements (32, 32a, 33, 33a) ouverts vers le bas dans lesquels peuvent pénétrer les courroies porteuses (2, 2a).

5. Dispositif selon l'une des revendications 1 à 4, caractérisé par le fait que l'une au moins des parois (8, 9) du puits qui s'étendent perpendiculairement à l'axe longitudinal des pièces usinées est réalisée de façon à pouvoir être réglée dans la direction longitudinale des pièces usinées.

6. Dispositif selon l'une des revendications 1 à 5, caractérisé par le fait que l'ouverture de remplissage (19) du puits est fermée par un capot (22) dont les parois sont insonorisées et qui offre un libre passage vers le puits (5) et vers le dispositif d'amenée (4).

7. Dispositif selon la revendication 6, caractérisé par le fait que le capot (22) est fixé par une charnière (23) de telle façon qu'il puisse être écarté par basculement et que, dans sa position basculée, il existe un libre passage depuis le haut vers l'intérieur du puits.

Fig.1

EP 0 282 800 B1

Fig. 2

Fig. 3

Fig. 4